**Europäisches Patentamt**

**European Patent Office**

**Office européen des brevets**

(19)

(11) Veröffentlichungsnummer: **0 040 303**
**B1**

(12) # EUROPÄISCHE PATENTSCHRIFT

(45) Veröffentlichungstag der Patentschrift:
05.12.84

(51) Int. Cl.³: **F 24 D 17/00, F 24 H 1/18**

(21) Anmeldenummer: **81101926.4**

(22) Anmeldetag: **16.03.81**

(54) **Vorrichtung zum Wärmeaustausch zwischen zwei unterschiedlich temperierten Flüssigkeiten.**

(30) Priorität: **16.05.80 DE 3018800**

(43) Veröffentlichungstag der Anmeldung:
**25.11.81 Patentblatt 81/47**

(45) Bekanntmachung des Hinweises auf die Patenterteilung:
**05.12.84 Patentblatt 84/49**

(84) Benannte Vertragsstaaten:
**AT BE CH DE FR GB IT LI NL SE**

(56) Entgegenhaltungen:
**DE - A - 2 635 681**
**DE - A - 2 754 981**
**FR - A - 691 648**

**BROCKHAUS ENZYKLOPÄDIE, 20 Band, 1974, Seite 25**

(73) Patentinhaber: **Buderus Aktiengesellschaft,
Sophienstrasse 32-34, D-6330 Wetzlar (DE)**

(72) Erfinder: **Stephan, Ernst-Wilhelm, Kirchberger Weg 20,
D-6301 Staufenberg (DE)**
Erfinder: **Stiller, Norbert, Dr., Auf dem Rücken 5,
D-6330 Wetzlar 21 (Nauborn) (DE)**

(74) Vertreter: **Benner, Alwin, Dipl.-Ing., Buderus
Aktiengesellschaft ZA-Patentabteilung Postfach 1220,
D-6330 Wetzlar (DE)**

## Beschreibung

Die Erfindung betrifft eine Vorrichtung nach dem Oberbegriff des Patentanspruches 1. Eine Vorrichtung dieser Art ist in der DE-A-2 635 681 und in der DE-A-2 754 981 beschrieben und dargestellt.

Ein bevorzugtes Anwendungsgebiet für die genannte Vorrichtung besteht im Bereich der Wärmerückgewinnung aus Abwasser. Damit ein ausreichender Wärmeaustausch erfolgen kann, wird das Abwasser und das Frischwasser durch getrennte Behälter geleitet, die gemäss der DE-A-2 635 681 von Wärmerohren durchsetzt sind. Die Wärmerohre sorgen infolge ihrer Füllung mit einem verdampfbaren Fluid für eine aussergewöhnlich gute Wärmeübertragung. Für die Funktionsfähigkeit der Wärmerohre ist es dabei angebracht, dass der Frischwasserbehälter über dem Abwasserbehälter liegt, da auf diese Weise ein einwandfreies Verdampfen und Kondensieren des Fluids entsprechend einem Schwerkraftwärmerohr garantiert ist. Abwasser darf auf keinen Fall mit Frischwasser, d.h. Trinkwasser vermischt werden. Leckstellen zwischen beiden Behältern müssen deshalb unbedingt ausgeschlossen sein. Im Bereich der Rohrdurchdringung treten hier besondere Abdichtprobleme auf, die nur durch kostenintensive Schweiss- und Fertigungsmethoden verhindert werden können.

Gemäss der DE-A-2 754 981 wurde auch schon einer der beiden Behälter von einer Verdampferstufe eines Wärmerohres umgeben. Von dort führt ein Rohr zu einer Kondensatorstufe im anderen Behälter. Wanddurchdringungen mit den üblichen Nachteilen einschliesslich der aufwendigen Fertigung werden dabei in Kauf genommen.

Die Dichtprobleme zwischen beiden Behältern sollen behoben und die Herstellung der gesamten Vorrichtung soll vereinfacht werden.

Gemäss der Erfindung wird dieses erreicht durch eine Vorrichtung mit dem im Kennzeichen des Patentanspruches 1 genannten Merkmal.

Das Wärmerohr umgibt beide Behälter und vermeidet Durchdringungen der Trennwand zwischen den Behältern, wodurch jegliche mechanische Arbeiten im Innern der Behälter entfallen. Das Befüllen des äusseren flächigen Wärmerohres ist sehr einfach. Es steht der gesamte Umfang der Behälter als wärmeleitende Oberfläche des Wärmerohres zur Verfügung.

Die äussere Begrenzung des Wärmerohres bildet eine Wand, die die Behälterwände in geringem Abstand umgibt. Der Zwischenraum, der ein Gewebe oder Lochblech und das verdampfbare Fluid enthält, kann mit vertikalen Stegen versehen sein. Eine Verbesserung des Wärmeüberganges wird durch Sandstrahlen der Aussenflächen beider Behälter erreicht, was zu einer Reinigung und Aufrauhung der Flächen führt.

Wie an sich bekannt, ist der Frischwasserbehälter über dem Abwasserbehälter angeordnet. Die Flüssigkeit mit der höheren Temperatur liegt dabei unten, so dass das verdampfbare Fluid im Wärmerohr verdampfen und im oberen Frischwasserbereich wieder kondensieren kann. Die zurückgewonnene Wärme kann nicht wieder zurückfliessen. Auf eine Steuerung des Wärmeflusses kann weitgehend verzichtet werden. Eine Zugabe nicht kondensierbarer inerter Gase zum Fluid kann ggf. zur exakten Temperatursteuerung des Frischwasserspeichers benutzt werden.

Die beigefügte Zeichnung stellt ein Ausführungsbeispiel der Erfindung dar.

Es zeigt:

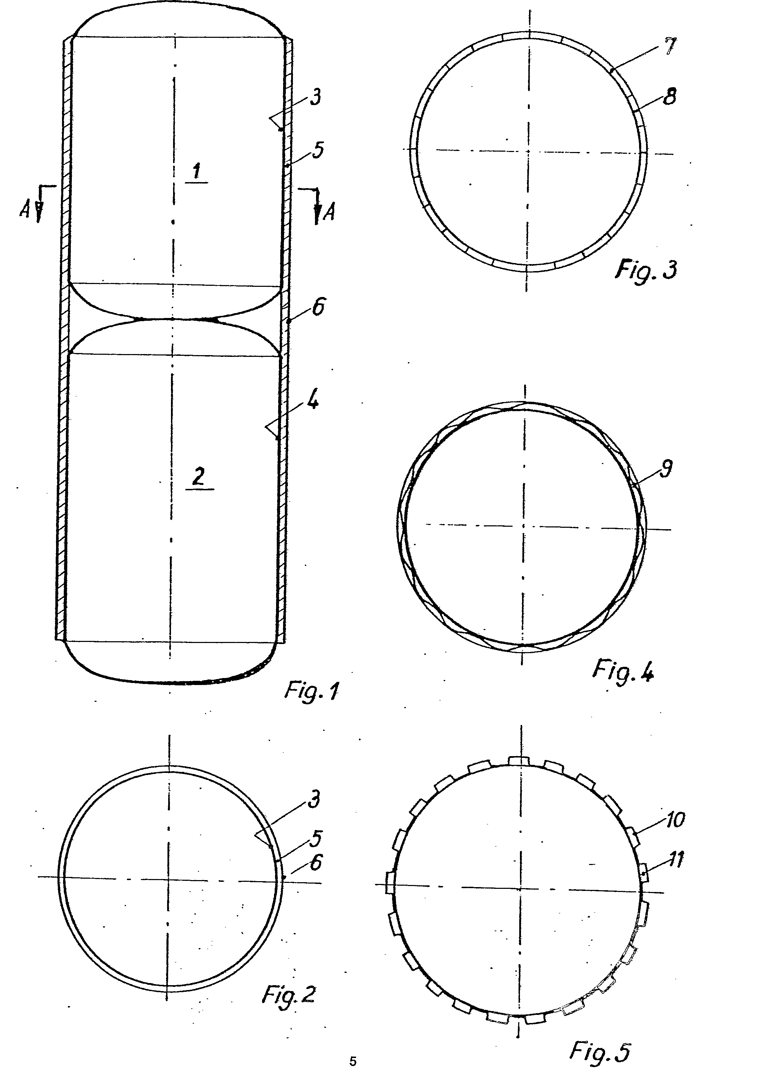

Fig. 1 Eine Vorrichtung im senkrechten Längsschnitt,

Fig. 2 bis Fig. 5 Den Querschnitt A–A aus Fig. 1 mit unterschiedlicher Gestaltung des Mantels.

Ein Frischwasserbehälter 1 sitzt über einem Abwasserbehälter 2. Anschlusselemente und Rohrleitungen sind nicht dargestellt, da sie nicht Gegenstand der Erfindung sind. Die Aussenwände 3, 4 beider Behälter 1, 2 sind von einem Wärmerohr 5 umgeben, das durch eine äussere Wand 6 begrenzt ist. Vertikale Stege 7 erzeugen vertikale Kanäle 8 innerhalb des Wärmerohres. Im Wärmerohr sind gewellte Lochbleche 9 bzw. eine Gewebebahn vorgesehen.

Durch diese Mittel wird die Zirkulation des Fluids innerhalb des Wärmerohres gefördert. Eine Wellwand 10 auf den Aussenwänden 3, 4 der Behälter 1, 2 erzeugt eine Vielzahl von Kanälen 11.

## Patentansprüche

1. Vorrichtung zum Wärmeaustausch zwischen zwei unterschiedlich temperierten Flüssigkeiten, bestehend aus zwei übereinander angeordneten Behältern (1, 2) und einem den Wärmetransport fördernden Wärmeübertragungssystem mit einer Verdampferstufe und einer Kondensatorstufe, dadurch gekennzeichnet, dass das Wärmeübertragungssystem aus einem die beiden Behälter (1, 2) umgebenden Wärmerohr (5) mit einem Gewebe oder Lochblech (9) und einem verdampfbaren Fluid in einem Zwischenraum zwischen den Aussenwänden (3, 4) beider Behälter (1, 2) und einer diese im Abstand umgebenden Wand (6) gebildet ist.

2. Vorrichtung nach Anspruch 1, dadurch gekennzeichnet, dass in dem Zwischenraum vertikale Stege (7) zur Ausbildung vertikaler Kanäle (8) angeordnet sind.

3. Vorrichtung nach Anspruch 1, dadurch gekennzeichnet, dass das Wärmerohr (5) von einer die Aussenwände (3, 4) beider Behälter (1, 2) umgebenden, vertikale Kanäle (11) bildenden Wellwand (10) begrenzt ist.

4. Vorrichtung nach den Ansprüchen 1 bis 3, dadurch gekennzeichnet, dass die Aussenwände beider Behälter durch Sandstrahlen gereinigt sind.

## Claims

1. Apparatus for the heat exchange between two fluids of differing temperatures, consisting of two superimposed containers (1, 2) and a heat transmission system stimulating the heat transport provided with am evaporator step and a condenser step step, characterized in that the heat transmission system is constituted of a heat tube (5) surrounding the two containers (1, 2), having a tissue or perforated plate (9) and evaporizable fluid in an interspace between the outer walls (3, 4) of both containers (1, 2) and a spaced wall (6) surrounding the latter.

2. Apparatus according to the Claim 1, characterized in that in the interspace vertical webs for the formation of vertical channels (8) are arranged.

3. Apparatus according to the Claim 1, characterized in that the heat tube (5) is delimited by a corrugated wall (10) surrounding the outer walls (3, 4) of both containers (1, 2) and forming vertical channels (11).

4. Apparatus according to the Claims 1 to 3, characterized in that the outer walls of both containers are cleaned by sand blasting.

**Revendications**

1. Dispositif pour échanger de la chaleur entre deux liquides ayant des températures différentes, composé de deux réservoirs superposés (1, 2) et d'un système de transmission de chaleur favorisant le transport de chaleur avec un étage évaporateur et un étage condenseur, caractérisé en ce que le système de transmission de chaleur est formé par un tube de chaleur (5) qui entoure les deux réservoirs (1, 2) avec un tissu ou tôle perforée (9) et un fluide évaporable dans un espace intermédiaire entre les parois extérieures (3, 4) des deux réservoirs (1, 2) et une cloison (6) qui entoure ceux-ci à distance.

2. Dispositif selon la revendication 1, caractérisé en ce que dans l'espace intermédiaire sont disposées des nervures verticales (7) pour former des canaux verticaux (8).

3. Dispositif selon la revendication 1, caractérisé en ce que le tube de chaleur (5) est délimité par une cloison ondulée (10) qui forme des canaux verticaux (11) et entoure les parois extérieures (3, 4) des deux réservoirs (1, 2).

4. Dispositif selon les revendications 1 à 3, caractérisé en ce que les parois extérieures des deux réservoirs sont nettoyées par sablage.

0 040 303

Fig. 1

Fig. 2

Fig. 3

Fig. 4

Fig. 5